# EUROPÄISCHE PATENTANMELDUNG

(11) **EP 1 154 181 A2**
(43) Veröffentlichungstag der Anmeldung: **14.11.2001**
(21) Anmeldenummer: 01110853.7
(22) Anmeldetag: 04.05.2001
(51) Int. Cl.: F16K 31/06

(54) **Magnetventilanordnung**

(30) Priorität: 09.05.2000 DE 20008320 U
(71) Anmelder: H+P Labortechnik GmbH, 85764 Oberschleissheim (DE)
(72) Erfinder: Dr. Herz, Helmut, 80997 München (DE); Gerstmayer, Michael, 80331 München (DE)
(74) Vertreter: Kuhnen & Wacker

(57) **Zusammenfassung**

Bei einer Magnetventilanordnung für eine Leitung (3) die an eine Kammer, insbesondere eines Sterilisators, angeschlossen ist, wobei mindestens eine Kammerwand (1) aus nicht-magnetischem Werkstoff gefertigt ist und eine außerhalb der Kammer befindliche Erregerspulenanordnung (14) einem Magnetkemsystem (11, 12) zugeordnet ist, welches einen Ventilkörper (6) des den Durchfluss durch die genannte Leitung (3) steuernden Magnetventils betätigt, werden bestimmte, innerhalb der Kammer herrschende Bedingungen, insbesondere Sterilisationsbedingungen, an den unmittelbaren Bereich zwischen Ventilkörper und Ventilsitz dadurch herangetragen, daß der Ventilkörper (6) und ein zugehöriger Ventilsitz (5) an einer Leitungsausmündung innerhalb der Kammer angeordnet sind und Teile des Magnetkernsystems (11, 12) von der Erregerspulenanordnung (14) aus dicht durch die Kammerwand (1) geführt sind und innerhalb der Kammer mechanisch oder magnetisch mit dem Ventilkörper (6) zu dessen Betätigung gekoppelt sind (hierzu Fig. 1).

## Beschreibung

Die Erfindung betrifft eine Magnetventilanordnung für eine Leitung, die an eine Kammer angeschlossen ist, die eine Kammerwand aus nichtmagnetischem Werkstoff aufweist, mit einer außerhalb der Kammer befindlichen Erregerspulenanordnung, die einem Magnetkernsystem zugeordnet ist, welches einen Ventilkörper des den Leitungsdurchfluß steuernden Magnetventils betätigt. Als Kammer wird in dieser Beschreibung und in den Ansprüchen ein eine beliebig Gestalt aufweisendes System mit dichter Wand verstanden, also auch scheibenförmig, spaltenartige, rohrförmige und dergleichen Gebilde.

Handelt es sich bei der Kammer um einen Bereich, der von der freien Umgebung bezüglich der in ihm herrschenden Bedingungen in bestimmten Betriebsphasen getrennt gehalten werden muß, so erweist es sich bei herkömmlichen Magnetventilen, welche in einer aus der Kammer herausgeführten Leitung liegen, als nachteilig, das eine zwischen dem Magnetventil bzw. dessen Ventilsitz und dessen Ventilkörper einerseits und der Einmündung in die Kammer andererseits gelegener Leitungsabschnitt eine Flüssigkeit oder ein Gas oder einen Dampf enthalten kann, der nicht den in der Kammer herrschenden Bedingungen ausgesetzt ist oder ausgesetzt war, beim Öffnen des Magnetventils aber dem Strömungsmittelstrom hinzugefügt wird, der aus der Kammer austritt oder in die Kammer eintritt.

Besonders deutlich wird dieses Problem bei Sterilisationskammern, bei denen es vorkommen kann, daß durch Material, welches sich in einem kurzen Leitungsabschnitt zwischen einem Magnetventil und einer Leitungsausmündung aus der Sterilisationskammer befindet, der Inhalt der Sterilisationskammer entweder infiziert oder eine Druckabsenkung in der Kammer erfolgt oder reinfiziert wird, wenn das Magnetventil nach einem Sterilisationsvorgang geöffnet wird, da der im erwähnten Leitungsabschnitt befindliche Gasrest oder Flüssigkeitsrest nicht den Sterilisationsbedingungen in der Kammer ausgesetzt war, weshalb Keime dem übrigen Inhalt der Sterilisationskammer hinzugefügt werden, oder beim Entleeren der Sterilisationskammer als Restkeime aus der Abzweigleitung abströmen.

Ziel der Erfindung ist es daher, eine Magnetventilanordnung der eingangs definierten Art so auszugestalten, daß bestimmte, innerhalb einer Kammer herrschende Bedingungen an den unmittelbaren Bereich zwischen Ventilkörper und Ventilsitz eines Magnetventils herangetragen werden können.

Dieses Ziel wird erfindungsgemäß dadurch erreicht, daß der Ventilkörper und ein zugehöriger Ventilsitz an einer Leitungsausmündung innerhalb der Kammer angeordnet sind, daß Teile des Magnetkernsystems des Magnetventils von der Erregerspulenanordnung aus dicht durch die Kammerwand geführt sind und innerhalb der Kammer mechanisch oder magnetisch mit dem Ventilkörper zu dessen Betätigung gekoppelt sind.

Dadurch, daß die Leitungsausmündung aus der Kammer den durch den Ventilkörper abzuschließenden Ventilsitz bildet und das Betätigungssystem für den Ventilkörper ein dicht durch die Kammerwand geführtes Teil des Magnetkemsystems enthält, liegen wesentliche Teile der hier angegebenen Magnetventilanordnung in der Kammer, in der besondere thermische, thermodynamische oder chemische Bedingungen herrschen können, während die Erregerspulenanordnung außerhalb der Kammer gelegen ist, wobei insgesamt ein verhältnismäßig einfacher und übersichtlicher Aufbau erzielt wird.

Vorteilhafte Ausgestaltungen und Weiterbildungen der vorstehend umrissenen, hier vorgeschlagenen Magnetventilkonstruktion sind in den dem anliegenden Anspruch 1 nachgeordneten Schutzansprüchen gekennzeichnet, deren Inhalt hierdurch ausdrücklich zum Bestandteil der Beschreibung gemacht wird, ohne an dieser Stelle den Wortlaut zu wiederholen.

Nachfolgend werden einige Ausführungsbeispiele anhand der Zeichnung beschrieben. Es stellen dar:
- Figur 1: eine schematische, im Schnitt gezeichnete Ansicht eines Magnetventils in einer grundsätzlichen Ausführungsform,
- Figur 2: eine im Schnitt gezeichnete Seitenansicht einer praktischen Ausführungsform einer Magnetventilanordnung der hier vorgeschlagenen Art;
- Figur 3: eine perspektivische, teilweise schematisierte Ansicht einer gegenüber Figur 2 abgewandelten Ausführungsform einer Magnetventilanordnung der erfindungsgemäßen Art. und
- Figur 4: eine im Schnitt gezeichnete Seitenansicht einer nochmals abgewandelten Form einer Magnetventilanordnung der hier angegebenen Art.

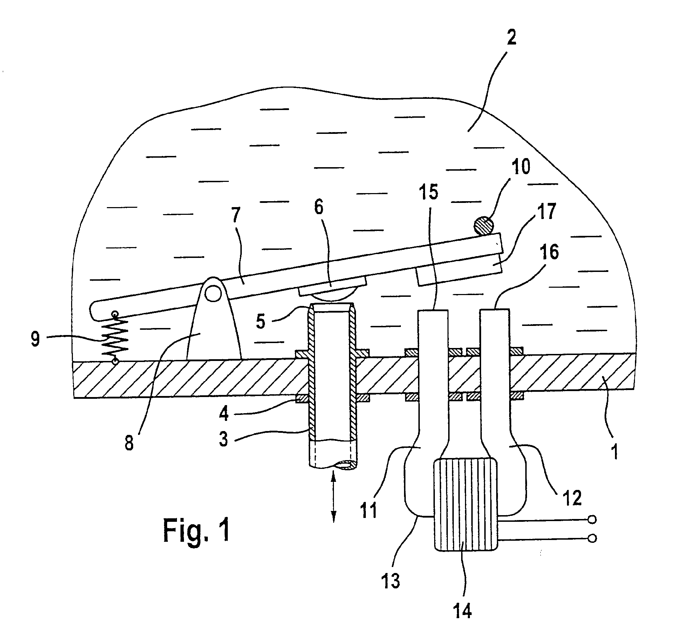

Figur 1 zeigt eine aus nichtmagnetischem, magnetfelddurchlässigem Werkstoff gefertigte Wand 1 eines Sterilisationsbehälters, welcher einen Innenraum 2 umschließt, in welchem während des Sterilisationsvorganges Dampf erhöhten Druckes und erhöhter Temperatur eingeschlossen ist. Im Sterilisationsbehälter befindliches Sterilisationsgut wird durch diese Bedingungen innerhalb des Sterilisationsbehälters keimfrei gemacht.

Durch die Wand 1 ist eine Leitung 3 dicht hindurchgeführt, wobei ein innerhalb des Sterilisationsbehälters gelegener Abschnitt der Leitung 3 sich mit einem Bund gegen die Innenseite der Wand 1 abstützt und mittels einer Mutter 4, welche auf einen nicht gezeigten Gewindeabschnitt aufgeschraubt ist, an der Wand 1 festgezogen ist.

Das innerhalb des von der Wand 1 umschlossenen Behälters gelegene Ende der Leitung 3 ist als Ventilsitz 5 ausgebildet welcher mit einem Ventilkörper 6 zusammenwirkt. Dieser Ventilkörper 6 ist an einem Ventilhebel 7 befestigt, der innerhalb des Sterilisationsbehälters an einer Lageranordnung 8 schwenkbar gelagert und durch Federmittel 9 in eine durch einen Anschlag 10 bestimmte Stellung vorgespannt ist, in welcher der Ventilkörper 6 von dem Ventilsitz 5 abgehoben ist.

Außer der Durchführung für die Leitung 3 sind in der Wand 1 des Sterilisationsbehälters zwei weitere Durchführungen für die Schenkel 11 und 12 eines Magnetkernsystems 13 gebildet, das von einer Erregerspulenanordnung 14 umschlungen ist. Die dicht durch die Wand 1 geführte Schenkel 11 und 12 enden in Polflächen 15 und 16 innerhalb des Sterilisationsbehälters. Den Polflächen 15 und 16 steht ein an dem Ventilhebel 7 befestigtes Joch 17 gegenüber. Wird die Erregerspule 14 durch Strombeaufschlagung erregt, so wird das Joch 17 von dem aus den Polflächen 15 und 16 austretenden Magnetfeld in Richtung auf eine Vervollständigung des magnetischen Schließungskreises gezogen und der Ventilhebel 7 wird mit Bezug auf die Darstellung von Figur 1 im Uhrzeigersinn verschwenkt, so daß der Ventilkörper 6 gegen die Vorspannkraft der Feder 9 auf den Ventilsitz 5 gedrückt wird und die Leitung 3 abschließt. Bei Abschalten der Strombeaufschlagung der Erregerspulenanordnung 14 öffnet sich das Ventil wieder. Bei dem in Figur 1 gezeigten Ventil liegen der Ventilkörper und der Ventilsitz sowie die Mittel zur Kopplung des Ventilkörpers mit dem Magnet-Betätigungsmechanismus innerhalb der Sterilisationskammer und sind dem sterilisierenden Einfluß der Umgebungsbedingungen innerhalb der Kammer ausgesetzt, so daß nicht keimbeladene Restmengen eines Leitungsabschnittes zwischen Sterilisationskammer und Ventilsitz zu einer Infektion oder Reinfektion des Sterilisationsgutes führen können.

Die in Figur 1 gezeigte Anordnung ermöglicht beträchtliche Ventilbetätigungskräfte ohne ein Wirksamwerden magnetischer Felder, welche nicht von magnetisch aktivem Werkstoff erfüllte Bereiche überbrücken müssen, welche sich durch die nicht magnetische Kammerwand hindurch erstrecken. Das zu einem Anker oder einem Joch des Ventilbetätigungsmechanismus reichende, nicht im Magnetkernsystem verlaufende Magnetfeld ist gemäß einem prinzipiellen Gedanken der vorliegenden Erfindung unmittelbar an das Betätigungsjoch oder den Betätigungsanker hingeführt.

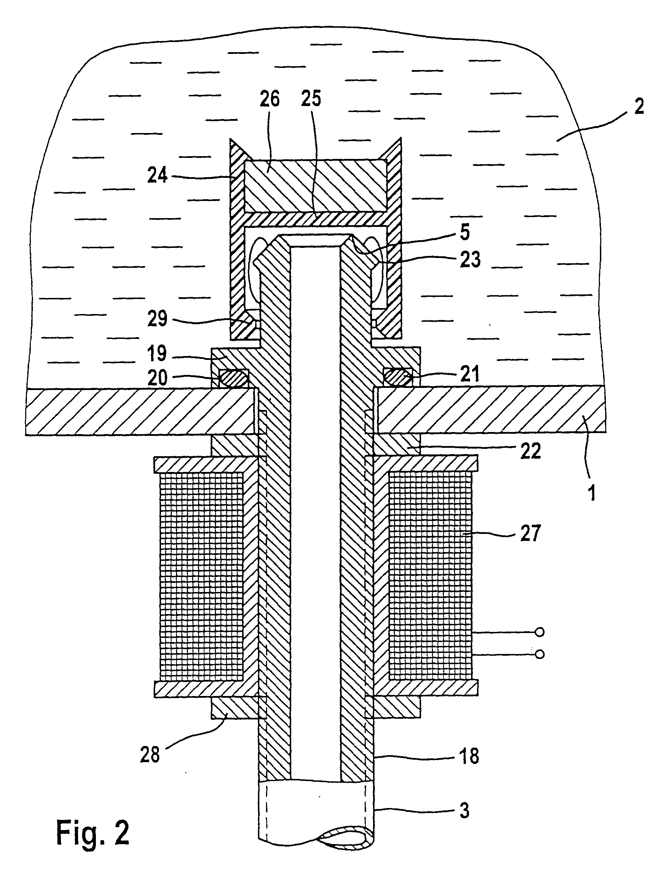

Während bei der in Figur 1 gezeigten und zuvor beschriebenen Ausführungsform die Leitung 3 und das Magnetkernsystem 13 gesonderte Bauteile bilden, sind bei der Ausführungsform nach Figur 2 diese Bauteile zu einem einzigen Bauteil vereinigt. Hier ist der in den Innenraum 2 des von der nichtmagnetischen Wand 1 umschlossenen Behälters hineinreichende Teil der Leitung 3 aus magnetisch weichem Material, also magnetisch aktivem Material gefertigt und bildet nicht nur den vorderen Leitungsabschnitt sondern zugleich auch einen rohrförmigen Magnetkern, der hier mit 18 bezeichnet ist.

An ihrem im Innenraum 2 des Sterilisationsbehälters gelegenen Abschnitt ist die Leitung 3 mit einem Bund 19 versehen, in welchem eine sich axial öffnende Umfangsnut 20 ausgebildet ist, die zur Aufnahme eines O-Dichtungsringes 21 dient. Durch eine auf ein Außengewinde des gezeigten Abschnittes der Leitung 3 aufgeschraubte Mutter 22 ist unter Zusammenpressen des O-Ringes 21 der Bund 19 gegen die Innenseite der Wand 1 abdichtend festgespannt und die Leitung 3 an der Wand 1 befestigt.

Der Ventilkörper bei dem Magnetventil nach Figur 2 hat die Gestalt eines einen Außenwulst 23 im Bereich des Ventilsitzes 5 übergreifenden Kunststoffkäfigs 24 aus zähelastischem Werkstoff, der ein Deckelteil 25 enthält, das sich in der Ventilschließstellung dicht gegen den Ventilsitz 5 anpreßt. Im oberen Teil des Kunststoffkäfigs 24 ist ein Ankerstück 26 aus magnetisch aktivem Werkstoff befestigt. Es kann sich um ein weichmagnetisches Teil handeln. Bei bestimmter Ausbildung des hier beschriebenen Magnetventils kann jedoch das Ankerstück 26 auch ein in bestimmter Weise magnetisierter Permanentmagnet sein, worauf weiter unten noch näher eingegangen wird.

Auf den außerhalb des Sterilisationsbehälters gelegenen Abschnitt der Leitung 3 ist eine Erregespule 27 aufgeschoben und durch eine auf den betreffenden Leitungsabschnitt 3 aufgeschraubte Mutter 28 befestigt. Wird die Erregerspule 27 mit Gleichstrom beaufschlagt, so wird der Kern 18 in seiner Gesamtheit magnetisiert und bildet im Bereich seines oberen Endes mit Bezug auf die Darstellung von Figur 2, also im Bereich seines Ventilsitzes 5 einen Nordpol oder einen Südpol aus. Wird der Ventilkörper 24 durch einen etwa im Innenraum 2 des Sterilisationsbehälters herrschenden Unterdruck ständig in den Behälterinnenraum gezogen und dadurch von dem Ventilsitz 5 abgehoben gehalten, wobei Profilnasen 29 dem Umfangswulst 23 hintergreifen und den Ventilkörper insgesamt auf der Leitungsausmündung festhalten, so bewirkt die Gleichstrombeaufschlagung der Erregerspule 27 nun, daß das Ankerstück 26 auf das obere Ende des Magnetkerns 18 hingezogen wird und das Deckelteil 25 des Ventilkörpers gegen den Ventilsitz 5 anpreßt. Das Magnetventil wird dadurch geschlossen und bei Aufrechterhaltung der Erregung der Erregerspule 27 geschlossen gehalten.

Ist der Druck in der Leitung stets höher als der Druck im Innenraum 2 der Kammer oder des Behälters, so wird bei Abschalten der Erregung der Erregerspule 27 das Ankerteil 26 nicht mehr gegen den Kern 18 gezogen und durch den in der Leitung herrschenden Überdruck wird der Ventilkörper 24 von dem Ventilsitz 5 abgehoben. Strömungsmittel kann dann aus der Leitung 3 über Durchtrittsöffnungen, welche in dem Führungskäfig des Ventilkörpers 24 vorgesehen sind, in den Innenraum der Kammer oder des Behälters einströmen.

Ist aber das Ankerteil 26 nicht ein weichmagnetisches Bauteil sondern ein Permanentmagnet, etwa aus einem Ferrit, wobei die Oberseite mit Bezug auf die Darstellung von Figur 2 beispielsweise als Nordpol und die Unterseite als Südpol magnetisiert sind, so kann durch Umschalten des Stromes in der Erregespule 27 der Ventilkörper 24 entweder von dem Ventilsitz abgehoben oder auf den Ventilsitz 5 niedergedrückt werden. Sind die durch entsprechende Dimensionierung der Erregerspule 27 und des Ankerstückes 26 erzeugten Kräfte ausreichend groß, so kann die Ventilbewegung durch entsprechende Schaltung des Stromes durch die Erregerspule unabhängig von dem Druckverhältnissen in der Leitung 3 und im Innenraum der Kammer oder des Behälters gesteuert werden.

Gemäß einer in der Zeichnung nicht gezeigten Ausführungsform kann jedoch auch etwa zwischen dem Bund 19 und dem unteren Ende des Käfigs des Ventilkörpers 24 eine Feder eingesetzt werden, welche den Ventilkörper normalerweise in seine Öffnungsstellung drängt.

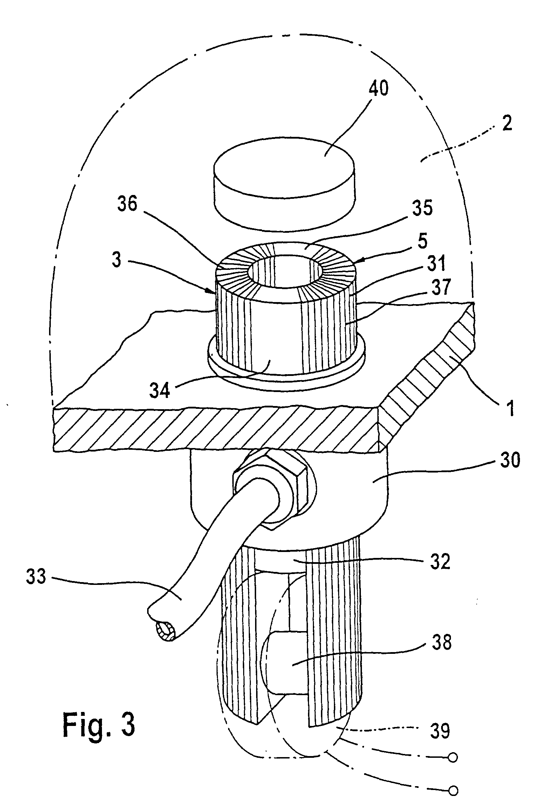

Figur 3 zeigt eine Ausführungsform, bei der ein Abschnitt der Leitung 3 von einer Anschlußarmatur 30, die außerhalb der Wand 1 aus nichtmagnetischem Werkstoff gelegen ist, zu dem innerhalb des Behälters oder der Kammer aufragenden Ende 31 reicht, dessen Stirnfläche den Ventilsitz 5 darstellt. Die Bohrung dieses Leitungsabschnittes reicht vom Ventilsitz 5 bis zu einem unteren Abschluß 32 und hat Verbindung mit einer nahe diesem Abschluß 32 vorgesehenen Radialbohrung, die ihrerseits auf den Leitungsanschluß 33 mündet.

Der genannte Abschnitt der Leitung 3 ist aus zwei zylindersektorförmigen, magnetisch nicht aktiven Schalen 34 und 35 und zwei aus magnetisch aktivem Werkstoff gefertigten zylindersektorförmigen Schalen 36 und 37 zusammengesetzt, wobei sich die beiden magnetisch aktiven Schalen 36 und 37 nach abwärts über den Bereich des Abschlusses 32 hinaus zu einem sie verbindenden Kern 38 erstrecken, der von einer durch strichpunktierten Linien angedeuteten Erregerspule 39 umschlungen ist. In der aus Figur 3 ersichtlichen Weise ist die Anordnung dicht durch die Wand 1 der Kammer oder des Behälters hindurchgeführt.

Der obere Teil 31 des Leitungsabschnittes mit dem Ventilsitz 5 wirkt mit einem Ventilkörper 40 zusammen, der eine weichmagnetische Scheibe enthält, die als Joch wirksam ist und bei Erregung der Erregerspule 39 gegen den Ventilsitz 5 gezogen wird, so daß das Joch die Stirnflächen der zylindersektorförmigen Schalen 36 und 37 aus magnetisch aktivem Werkstoff überbrückt und der Ventilkörper 40 sich abdichtend auf den Ventilsitz legt.

In Figur 3 sind zur Vereinfachung Führungsmittel ähnlich denjenigen von Figur 2 für die Führung des Ventilkörpers 40 weggelassen. Praktisch werden jedoch solche Führungsmittel, die den Ventilkörper 40 beim Öffnen und Schließen relativ zur Ausmündung der Leitung 3 axial führen, in Gestalt einer den Leitungsteil 31 umfassenden Hülse vorgesehen sein. Wirken die Führungsmittel mit axial verlaufenden Führungsnuten an dem Leitungsteil 31 zusammen, dann hat das Ankerstück in dem Ventilkörper 40 stets dieselbe Orientierung oder Drehstellung relativ zu den Stirnflächen der zylindersektorförmigen Schalen 36 und 37. In diesem Falle ist es möglich, das im Ventilkörper 40 eingebettete Ankerstück als Permanentmagnet auszubilden, der beispielsweise in dem der Stirnfläche der Schale 36 gegenüberliegenden Bereich als Nordpol und in dem der Stirnfläche der Schale 37 gegenüberliegenden Bereich als Südpol magnetisiert ist. Diese Ausbildung gestattet es, durch Umschalten der Richtung des Stromes durch die Erregerspule 39 den Ventilkörper 40 entweder auf den Ventilsitz 5 hinzuziehen oder von dem Ventilsitz abzustoßen.

Es sei noch auf die Möglichkeit hingewiesen, innerhalb des Innenraums des Behälters oder der Kammer an einer Halterung ein Schnappmechanismus oder eine Schnappmembran abzustützen, welche zur Befestigung des Ventilkörpers 40 dient, derart, daß die Bewegung des Ventilkörpers in die Schließstellung oder die Öffnungsstellung durch eine Impulsbeaufschlagung der Erregerspule 39 vorgenommen werden kann, die Öffnungsstellung oder Schließstellung aber danach auch ohne Erregung der Erregerspule 39 aufrechterhalten wird.

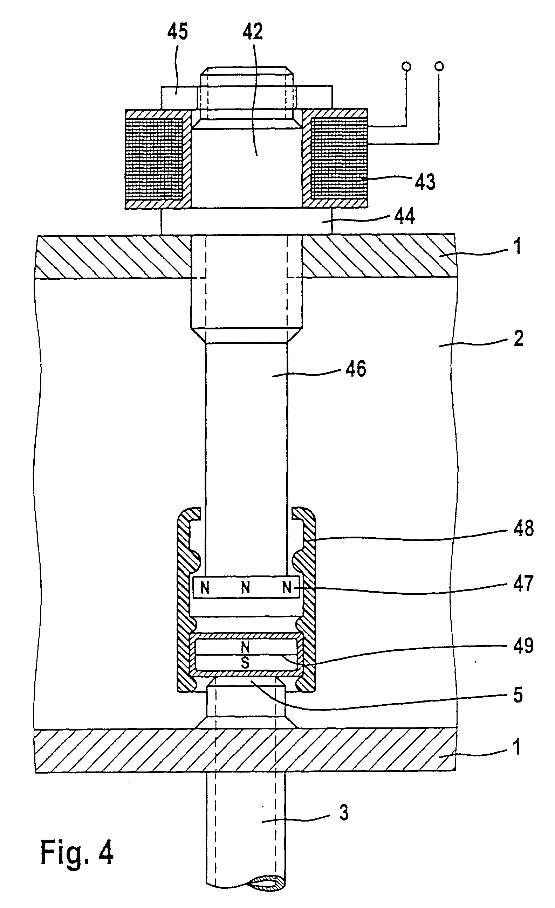

Bei der Ausführungsform nach Figur 4 enthält das Magnetkernsystem einen äußeren Abschnitt 42 etwa zylindrischer Gestalt, auf den eine Erregerspule 43 aufgeschoben ist. Die Erregerspule 43 ist auf dem äußeren Abschnitt 42 des Magnetkernsystems zwischen einem Bund 44 und einer Befestigungsmutter 45 eingespannt. Auf der der benachbarten Kammerwand 1 zugewandten Seite kann der Bund 44 mit einer sich axial öffnenden Ringnut versehen sein, in welche ein O-Ring zur Abdichtung gegenüber der Kammerwand eingelegt ist.

Axial schließt sich an den äußeren Abschnitt 42 des Magnetkernsystems ein koaxialer Übertragungsabschnitt 46 an, welcher durch den Innenraum der Kammer, oder, wenn der Innenraum 2 in einer Rohrleitung liegt, über den Rohrquerschnitt hinweg bis nahe zu der inneren Leitungsausmündung der durch die gegenüberliegende Kammerwand 1 geführten Rohrleitung 3 reicht.

Das freie Ende des Übertragungsabschnittes 46 trägt einen stirnseitigen Flansch etwas vergrößerten Durchmessers, hinter welchem innere Führungs-Ringwülste eines hülsenartigen, beispielsweise aus zähelastiachem Kunststoff gefertigten Führungskäfigs 48 greifen. Am vorderen, der Ausmündung der Leitung 3 bzw. dem dadurch gebildeten Ventilsitz 5 gegenüberliegenden Ende des Führungskäfigs 48 ist ein tablettenförmiger Ventilkörper 49 eingeschnappt. Dieser Ventilkörper enthält vorzugsweise eine temperaturfeste Permanentmagnetscheibe, welche mit Polytetraflourethylen umkleidet ist. Die Permanentmagnetscheibe ist so magnetisiert, daß die eine Scheibenseite einen Nordpol und die andere Scheibenseite einen Südpol ausbildet.

Je nach Pohlung des Erregerstromes durch die Erregerspule 43 bildet sich an dem freien Ende des Übertragungsabschnittes 46 der aus den Abschnitten 42 und 46 gebildeten Magnetkernanordnung ein Nordpol oder ein Südpol aus. Entsprechend der Magnetisierung des Permanentmagneten des Ventilkörpers 49 wird dieser zusammen mit dem hülsenartigen Führungskäfig 48 entweder gegen den Ventilsitz 5 angedrückt oder von dem Ventilsitz zur Öffnung der Leitungsausmündung der Leitung 3 abgehoben.

Gemäß einer nicht gezeigten Abwandlung der Ausführungsform nach Figur 4 kann bei einer größeren Länge des in den Innenraum 2 hineinstehenden Endes der Leitung 3 auf dieser der hülsenartige Führungskäfig 48 geführt werden. Ist jedoch die Kammerwand oder Leitungswand, durch welche die Leitung 3 in den Innenraum 2 geführt wird, eine Bodenwand, so ist man bestrebt den Ventilsitz 5 und zwecks möglichst weitgehender Entleerbarkeit des Innenraumes 2 so weit wie möglich d'em Niveau der Innenfläche der unteren Kammerwand 1 anzunähern.

## Patentansprüche

1. Magnetventilanordnung für eine Leitung (3), die an eine Kammer angeschlossen ist, die eine Kammerwand (1) aus nichtmagnetischem Werkstoff aufweist, mit einer außerhalb der Kammer befindlichen Erregerspulenanordnung (14; 27; 39; 43), die einem Magnetkernsystem (11, 12; 18; 36, 37, 38; 42; 46) zugeordnet ist, welches einen Ventilkörper (6; 24, 26; 40; 49) des den Leitungsdurchfluss steuernden Magnetventils (6; 24; 26; 40; 49) betätigt, **dadurch gekennzeichnet, daß** der Ventilkörper (6; 24, 26; 40; 49) und ein zugehöriger Ventilsitz (5) an einer Leitungsausmündung innerhalb der Kammer angeordnet sind, daß Teile des Magnetkernsystems (11, 12; 18; 36, 37; 42; 46) von der Erregerspulenanordnung (14; 27, 39; 43) aus dicht durch die Kammerwand (1) geführt sind und innerhalb der Kammer mechanisch oder magnetisch mit dem Ventilkörper zu dessen Betätigung gekoppelt sind.

2. Magnetventilanordnung nach Anspruch 1 **dadurch gekennzeichnet, daß** der Ventilkörper (24, 26; 40) ein dem Magnetkernsystem zugeordnetes Ankerteil oder Jochteil (26) enthält.

3. Magnetventilanordnung nach Anspruch 1 oder 2, **dadurch gekennzeichnet, daß** das Magnetkernsystem zwei dicht durch die Kammerwand (1) geführte Schenkel (11, 12; 36, 37) enthält, die außerhalb der Kammer über einen die Erregerspulenanordnung (14; 39) tragenden Steg oder Kern (38) verbunden sind.

4. Magnetventilanordnung nach Anspruch 3, **dadurch gekennzeichnet, daß** die dicht durch die Kammerwand geführten Schenkel (36, 37) hohlzylindersektorförmig sind und diametral einander gegenüberliegende Teile der Leitung (3) bilden, welche durch die Schenkel verbindende, nichtmagnetische, hohlzylendersektorförmige Teile (34, 35) vervollständigt ist und außerhalb der Kammer mit einer Anschlußarmatur (30) für den Leitungsanschluß trägt.

5. Magnetventilanordnung, nach Anspruch 1 oder 2, **dadurch gekennzeichnet, daß** das Magnetkernsystem (18) die Gestalt eines Bestandteil der Leitung (3) bildenden Rohrstückes aus magnetisch aktiven Werkstoff hat, welches außerhalb der Kammer durch eine Erregerspule (27) umgeben ist.

6. Magnetventilanordnung nach Anspruch 5, **dadurch gekennzeichnet, daß** ein in die Kammer hineinragender Abschnitt des Rohrstückes (18), welcher den Ventilsitz (5) aufweist, von einem hülsenartigen Führungskäfig zur axialen Führung des Ventilkörpers (24, 26) relativ zur Ausmündung der Leitung umgeben ist.

7. Magnetventilanordnung nach einem der Ansprüche 2 bis 6, **dadurch gekennzeichnet, daß** der Ventilkörper ein Ankerteil oder Jochteil aus einem hochtemperaturfesten Magnetwerkstoff enthält.

8. Magnetventilanordnung nach Anspruch 1 oder 2, **dadurch gekennzeichnet, daß** das Magnetkernsystem (42; 46) einen von der Erregerspulenanordnung (43) umgebenen äußeren Abschnitt (42) und einen sich axial an diesen anschließenden, dicht durch die Kammerwand (1) auf der Leitungsausmündung gegenüberliegenden Kammerseite geführten und mit seinem Ende der Leitungsausmündung gegenüberstehenden Übertragungsabschnitt (46) aufweist und daß der Ventilkörper (49) einen tablettenförmigen, auf seinen beiden Seiten unterschiedliche Pole aufweisenden, temperaturfesten Permanentmagneten enthält und in einem entweder auf dem Übertragungsabschnitt oder einem Rohrabschnitt der Leitungsausmündung verschieblich geführten, hülsenartigen Führungskäfig (48) gehalten ist.
